# EUROPEAN PATENT APPLICATION

(11) **EP 1 582 122 A1**
(43) Date of publication of application: **05.10.2005**
(21) Application number: 04380074.7
(22) Date of filing: 31.03.2004
(51) Int. Cl.: A47J 27/092

(54) **Safety device for pressure cookers**

(71) Applicant: Compania de Menaje Domestico SL, 48160 Derio (Vizcaya) (ES)
(72) Inventor: ANTUNANO CANTERO, Luis, 48160 Derio (Vizcaya) (ES)
(74) Representative: Davila Baz, Angel

(57) **Abstract**

A depressurization and opening safety device for pressure cookers comprising actuation means comprising a depressurization control (1) and an opening control (5), situated under the former, shaped so as to slide relatively between them according to a direction parallel to the handle of the cooker, and furthermore comprising a depressurization assembly (2) in turn comprising a pressure sensing element (4) which is situated in a manner that it is facing the end (22) of the depressurization control (1) which has an inclined surface (15) shaped such that the forward horizontal movement of the depressurization control (1) is transformed into a downward vertical shifting movement of the pressure sensing element (4). When the depressurization concludes, the depressurization assembly (2) moves downwards due to its own weight, allowing the forward movement of the depressurization control (1) with regard to the opening control (5) until reaching a stop, after which it drags said opening control (5), which in turn triggers a cooker opening safety system.

## Description

### FIELD OF THE INVENTION

The invention is included within the field of devices used in food pressure cookers and more specifically refers to a depressurization and opening safety device, in addition to functioning as a valve, enabling the depressurization of the cooker, not allowing the cooker to collect pressure when it is not correctly closed, and preventing the opening of the cooker if the pressure inside exceeds a predetermined safety value.

### BACKGROUND OF THE INVENTION

Pressure cookers usually include different safety systems, among which it is worth mentioning depressurization devices allowing the evacuation of the steam from inside the cooker when the cooking has concluded, valves allowing for the control of the internal pressure and cooker closing and opening safety devices for certain pressure conditions on the inside thereof, which are based on the use of pressure detecting elements which, interacting with the cooker closing and opening means, achieve maintaining a certain degree of opening and closing safety. The different devices disclosed usually act independently according to the situation.

In reference to the currently existing depressurization devices, the depressurization, in most cases, occurs in a violent and uncontrolled manner, large amounts of steam at high temperatures being emitted, possibly entailing a significant risk of accidental burns for the user of the cooker.

The objective of the present invention is to achieve integrating the cooker depressurization device, the closing and opening safety device and the valve in a single device in order to achieve a controlled depressurization of the cooker, the internal pressure of the cooker slowly being reduced until reaching a safety pressure, having reached said pressure, said device allows for the safe opening of the cooker.

This objective is obtained by means of the invention as it is defined in claim 1; preferred embodiments of the invention are defined in the dependent claims.

### DESCRIPTION OF THE INVENTION

The present invention refers to a depressurization and opening safety device for pressure cookers, comprising a safety valve which is shaped to act due to an internal overpressure in the cooker, evacuating the excess steam, and horizontally shiftable actuation means shaped to carry out the opening and closing of the cooker, said actuation means being assembled on the handle associated to the cover of the cooker such that when the cooker is in a closed position, said handle is facing another handle associated to the body of the cooker and situated thereunder.

The device is characterized in that the actuation means comprise a depressurization control and an opening control, situated under the former, shaped to remain connected to one another with the possibility of a relative sliding movement between them according to a direction parallel to the shaft of the handle associated to the cover of the pressure cooker; in that the depressurization and opening safety device comprises a depressurization assembly in turn comprising a pressure sensing element which is situated in a manner that it is facing the end of the depressurization control, said end having an inclined surface shaped such that when the opening control is actuated by the user in the depressurization direction, said depressurization control acts on the depressurization assembly, the forward horizontal movement thereof being transformed into a downward vertical shifting movement of the pressure sensing element, allowing the steam venting to the exterior, and in that the actuation means are shaped such that when the depressurization has concluded, the depressurization element moving downwards under the action of its own weight and allowing for the forward movement of the depressurization control, the depressurization control will shift with regard to the opening control until reaching a stop, after which it drags said opening control, which in turn, as a result of its forward movement, triggers a cooker opening safety system.

It is thus achieved that the controlled depressurization of the cooker and the safe opening thereof can be controlled at the same time by means of the device. This is basically achieved as a result of the possibility of relative movement between the depressurization control and the opening control to a certain point in the forward movement of the depressurization control, at which point the depressurization control butts with the opening control, the latter being dragged by said depressurization control, moving forward along with it and, as a result of this forward movement, achieving the triggering of the cooker opening safety system.

On the other hand, said inclined surfaces arranged on the end of the depressurization control allow achieving more or less lowering of the sensing element and, therefore, more or less steam venting to the exterior.

As a result of this particular configuration of the device, it is achieved that, by means of the exertion of pressure of more or less intensity on the actuation control, the user can regulate the cooker steam venting, being able to perform a controlled depressurization thereof, at all times controlling the amount of steam desired to be vented from the pressure cooker.

Only once it has been achieved that the pressure inside the cooker decreases from a given value will the pressure sensing element drop, allowing the opening control cover to move forward, which drags the opening control to a position such that it allows the latter to trigger the cooker opening safety system, making the opening control to be released from its interlocking with the handle associated to the body of the cooker, thus allowing the turning of the cooker cover with regard to the body, and therefore the opening thereof.

The depressurization assembly comprises, in addition to the pressure sensing element, a main body, the pressure sensing element being assembled inside said main body with the possibility of vertical shifting with regard to the latter; which main body defines a substantially cylindrically shaped chamber with at least one steam vent; and which pressure sensing element partially projects through the open upper base of the main body, and comprises an upper cover and lower bushing, which upper cover is topped with a cap and has at least one venting slit starting from the cap, and which lower bushing has a peripheral flange of larger diameter on its lower base, said lower bushing being locked with the upper cover by means of a peripheral rim situated on the upper lid, shaped so as to act as a retention stop, such that at all times the slits partially poke out to the exterior of the lower bushing.

During normal cooker operation, when it is heating up and has a certain internal pressure, the passage for the steam towards the main body from inside the cooker is blocked as a result of the peripheral flange arranged on the lower base of the lower bushing, which is facing the lower edge of the wall of the main body of the depressurization assembly, not allowing the steam to penetrate inside the main body, and therefore preventing the steam from being vented through the vents thereof.

When the cooker is pressurized, said cap is situated so as to interrupt the passage of the depressurization control which, by means of the inclined surfaces or ramps arranged on its end facing and in direct contact with the lower peripheral flange of the cap.

The depressurization of the cooker is carried out by moving the depressurization control forward, the cap automatically moving downwards, which in turn drags the pressure sensing element such that the lower flange of the lower bushing is separated from the lower edge of the main body allowing the passage of steam that is outwardly evacuated.

The lower bushing has a peripheral ring attached to it having on its lower face a certain upwards inclination shaped such that it channels the venting of the steam coming from inside the cooker towards the vents made in the main body which in turn direct the venting of the steam to the exterior when the depressurization of the cooker is carried out.

Thus, the steam that is vented from the cooker during the depressurization is suitably directed, and the depressurization of the cooker occurs in a controlled manner.

The pressure sensing element has a ball inside which obstructs the lower opening of the lower bushing, said ball being assembled against the action of a spring shaped such that the ball overcomes the force of the spring if the pressure exceeds a given safety value for the pressure inside the cooker, enabling the venting of the steam to the exterior through the slits of the upper cover of the pressure sensing element.

A safety system for the overpressure inside the cooker is thus defined since, for a pressure exceeding the safety pressure, the ball moves upwards through the lower bushing, overcoming the force produced by the spring, thus opening the passage to the excess steam from inside the pressure cooker. Since the slits partially poke out to the exterior of the lower bushing, in the moment in which the ball no longer obstructs the steam venting, said steam is vented through said slits until reaching a pressure value that is equal to or less than the safety value, the ball therefore moving downwards due to the action of the spring, and the vent for the steam vented to the exterior from inside the pressure cooker being closed again.

### BRIEF DESCRIPTION OF THE DRAWINGS

A series of drawings will be very briefly described below, which drawings aid in better understanding the invention and which are expressly related to an embodiment of said invention, presented as an illustrative and non-limiting example thereof.

Figure 1 shows a perspective view, front elevational view and upper plan view of the depressurization control.

Figure 2 shows a perspective view, front elevational view and upper plan view of the opening control.

Figure 3 shows a perspective view, upper plan view and front elevational view of the depressurization assembly of the device object of the present invention.

Figure 4 shows an exploded view of the pressure sensing element of the device object of the present invention.

Figure 5 shows a sectional view, according to the I-I cutting plane of Figure 3, of the depressurization assembly of the device object of the present invention when the cooker is operating at a pressure exceeding the safety pressure.

Figure 6 shows a sectional view, according to the I-I cutting plane of Figure 3, of the depressurization assembly of the device object of the present invention when the depressurization is being carried out.

Figure 7 shows a sectional view of the area of the cooker where the device object of the present invention is situated when the cooker is not operating.

Figure 8 shows a sectional view of the area of the cooker where the device object of the present invention is situated when the cooker is operating.

Figure 9 shows a sectional view of the area of the cooker where the device object of the present invention is situated when the cooker depressurization process begins.

Figure 10 shows a sectional view of the area of the cooker where the device object of the present invention is situated when the cooker depressurization has concluded and the cooker opening safety system is being triggered.

### DESCRIPTION OF A PREFERRED EMBODIMENT OF THE INVENTION

The invention refers to a depressurization and opening safety device for pressure cookers, to that end it incorporates actuation means assembled on the handle associated to the cover of the cooker.

The actuation means comprise a depressurization control 1 and an opening control 5, situated under the former, shaped so as to remain connected to one another with the possibility of a relative sliding movement between them according to a direction parallel to the shaft of the handle associated to the cover of the pressure cooker.

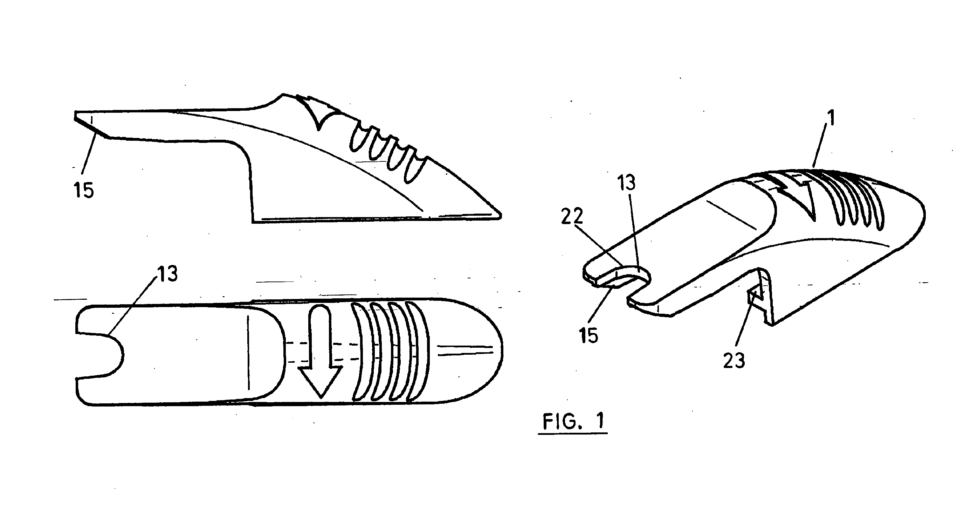

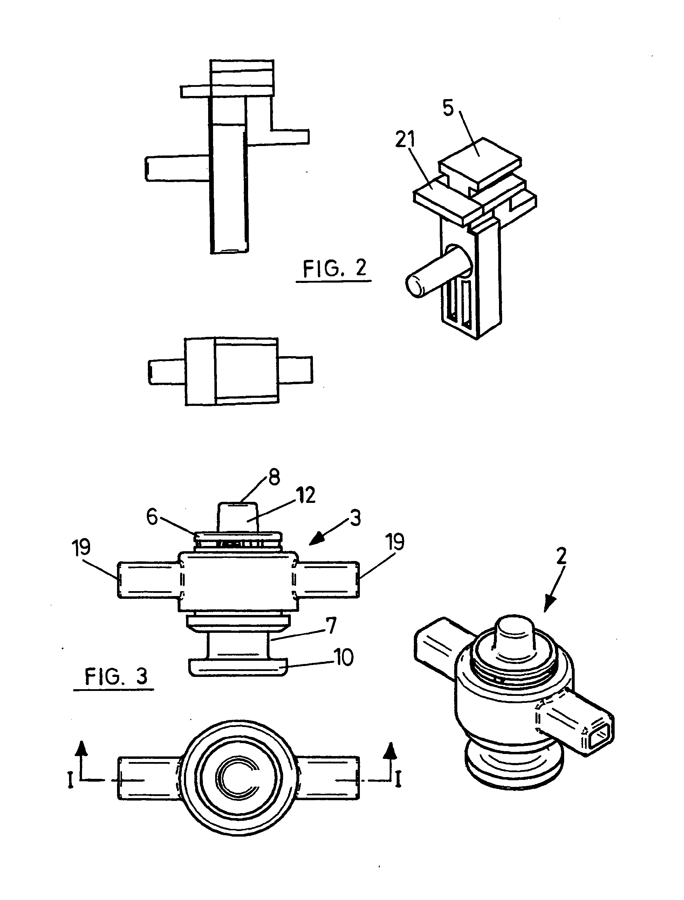

As can be seen in Figures 1 and 2, the depressurization control 1 has a partition 23 which, once the depressurization control 1 has been assembled on the handle associated to the cover of the cooker, defines in the lower portion a channel on which the projection 21 of the opening control 5 slides.

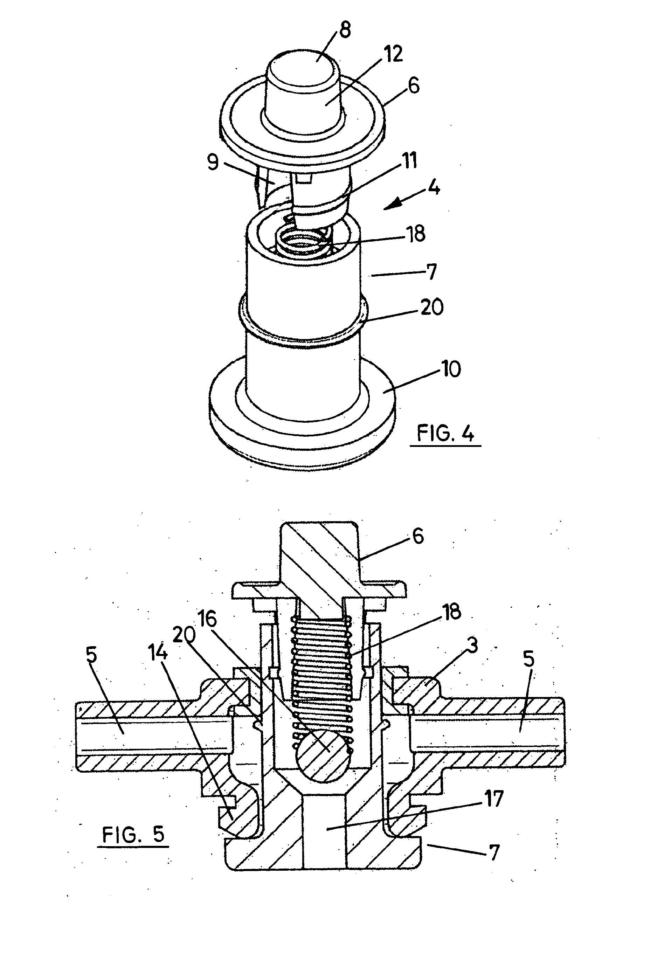

The depressurization and opening safety device object of the present invention comprises a depressurization assembly 2, shown in Figure 3, in turn having a pressure sensing element 4.

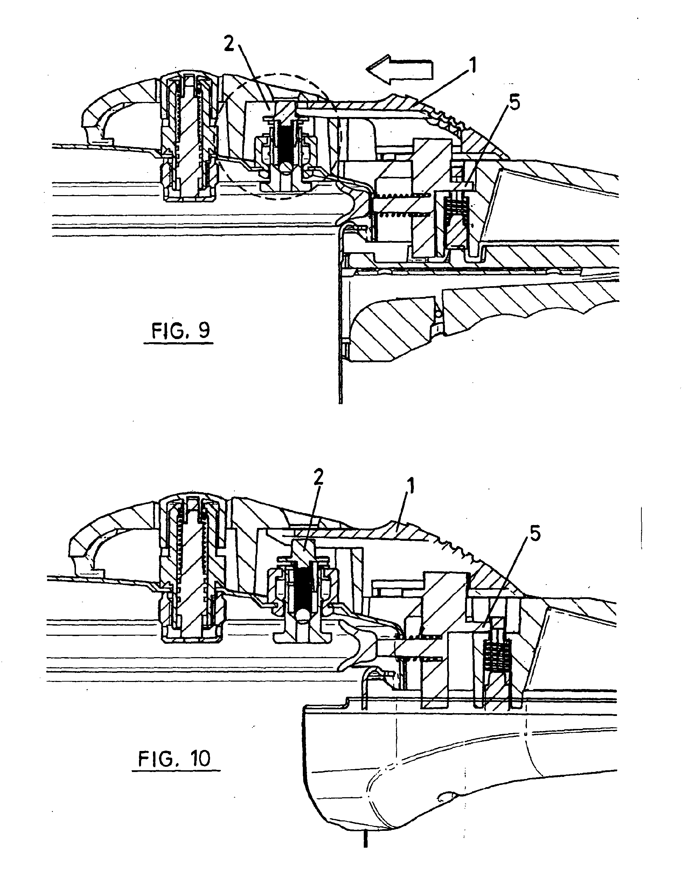

As is seen in Figure 4, said pressure sensing element 4 is situated in a manner that it is facing the end 22 of the depressurization control 1, said end 22 having an inclined surface 15 shaped such that when the depressurization control 1 is actuated by the user in the depressurization direction, shown by means of an arrow in Figure 9, said depressurization control 1 acts on the depressurization assembly 2, the forward horizontal movement being transformed into a downward vertical shifting movement of the pressure sensing device 4, allowing for the steam venting to the exterior.

Thus, as a result of said inclined surface or ramp of the depressurization control 1, more or less lowering of the sensing element 4 can be achieved, and therefore more or less steam venting to the exterior.

The actuation means are shaped such that when the depressurization has concluded, the depressurization assembly 2 moving downwards under the action of its own weight and allowing the forward movement of the depressurization control 1, the depressurization control 1 will shift with regard to the opening control 5 until reaching a stop, after which it drags said opening control 5, which in turn, as a result of its forward movement, triggers a cooker opening safety system, this moment is shown in Figure 10.

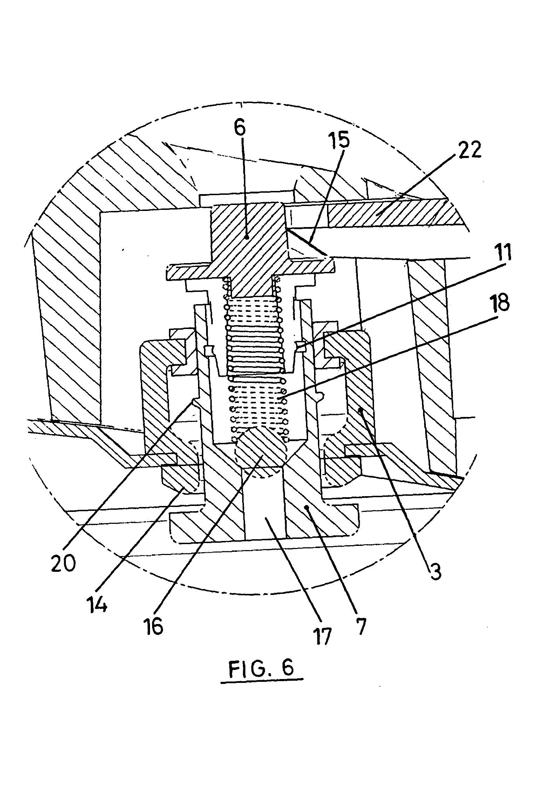

Figures 3, 4, 5 and 6 show in detail the configuration of the depressurization assembly 2, which in addition to comprising the pressure sensing element 4, comprises a main body 3, the pressure sensing element 4 being assembled inside the main body 3 with the possibility of vertical shifting with regard to the latter.

A substantially cylindrically shaped chamber with at least one steam vent 19 is defined in the main body 3, in this preferred embodiment of the invention, two diametrically opposed side vents 19 are arranged, which are basically respective tubular bodies starting from the main body 3, connecting the inside of the main body 3 of the depressurization assembly 2 with the inside of the cooker.

The pressure sensing element 4 partially projects through the open upper base of the main body 3, and comprises an upper cover 6 and a lower bushing 7. The upper cover 6 is topped with a cap 8 and has at least one venting slit 9 starting from the cap 8, in this preferred embodiment of the invention, two diametrically opposed slits 9 are arranged which, starting from the cap, reach the edge of the open base of the upper cover 6.

On the other hand, the lower bushing 7 has a peripheral flange 10 of a larger diameter on its lower base, said lower bushing 7 locking with the upper cover 6 by means of a peripheral projection 11 situated on the upper cover 6, shaped to act like a retention stop such that at all times the slits 9 partially poke out to the exterior of the lower bushing 7, leaving a vent for the steam contained in the cooker when it is needed, for example in the case of overpressure. This aspect of the invention is clearly seen in Figure 3.

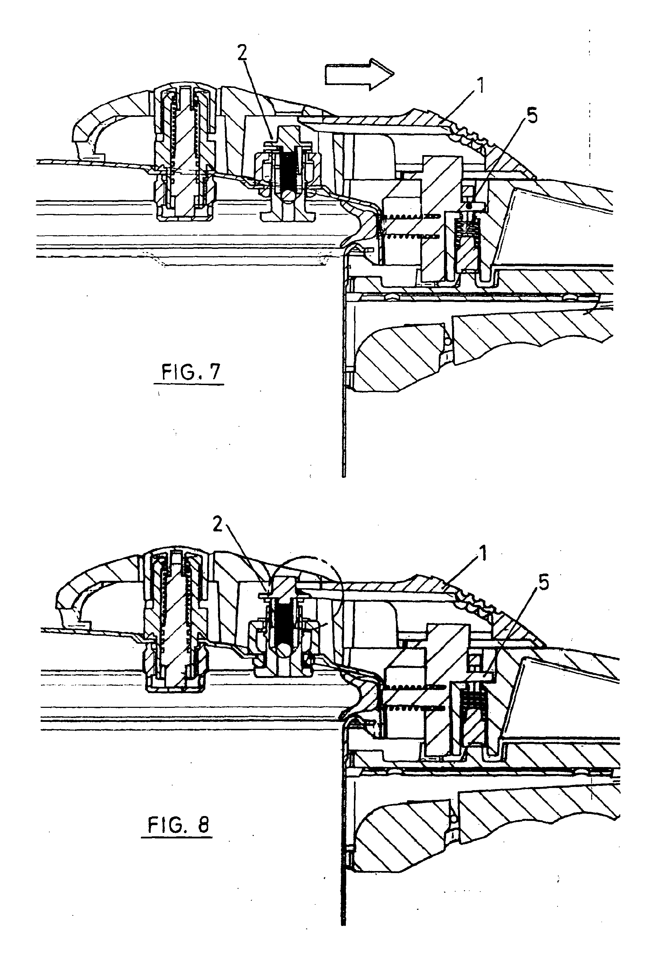

Figure 7 shows the cooker when it is not being operated, it can be seen how the depressurization assembly 2, and more specifically the pressure sensor 4, is in a lower position since in this moment there is no pressure inside the cooker, therefore the depressurization control 1 can be freely moved forwards or backwards.

During normal cooker operation, when it is heating up and has a certain internal pressure, the passage of steam towards the main body 3 from inside the cooker is blocked as a result of the peripheral flange 10 arranged at the lower base of the lower bushing 7, which is facing the lower edge 14 of the wall of the main body 3 of the depressurization assembly 2, as can be seen in Figure 9, for example, not allowing the steam that is inside the cooker to penetrate inside the main body 3, and therefore preventing the steam from being vented through the vents 19 thereof.

Figure 1 shows a detailed view of the configuration of the end of the depressurization control 1, said end has a curve-shaped recess 13 intended for housing the upper cylindrical portion 12 of the cap 8 inside. On both sides of said recess 13, said inclined surface 15 is arranged, materialized in two lower ramps having an inclination such that they transform the horizontal shifting of the depressurization control 1 into a vertical shifting of the pressure sensing element 4, since said inclined surfaces 15 act on the lower peripheral flange of the cap 8 which in turn pushes the lower bushing 7, making the sensing element 4 to move downwards with regard to the main body 3 and therefore causing the peripheral flange 10 to be separated from the lower edge 14 of the main body 3, leaving the steam vent through the space existing between the pressure sensing element 4 and the main body 3 free, which body is defined due to the allowance between them, this feature can be seen in Figures 4 and 10.

The lower bushing 7, Figures 4, 5 and 6, has a peripheral ring 20 attached to it which has a certain upward inclination on its lower face shaped such that it channels the venting of the steam coming from inside the cooker towards the vents 19 made in the main body 3 which in turn direct the venting of the steam to the exterior when the depressurization of the cooker is carried out.

With the described configuration of the device, by means of the exertion of pressure of more or less intensity on the actuation control, the user can regulate the steam venting of the cooker, being able to carry out a controlled depressurization thereof, at all times controlling the amount of steam desired to be vented from the pressure cooker and furthermore being able to direct the venting of said steam.

The pressure sensing element 4 has a ball 16 inside which obstructs the lower opening 17 of the lower bushing, as seen in Figure 4. The ball 16 is assembled against the action of a spring 18 having certain features, such that the ball 16 overcomes the force of the spring 18 if the pressure exceeds a given safety value for the pressure inside the cooker, enabling the venting of the steam to the exterior through the slits 9 of the upper cover 6 of the pressure sensing element 4.

This configuration inside the depressurization assembly 2 defines a safety system for overpressures inside the pressure cooker, since at a pressure exceeding the safety pressure, the ball 16 moves upwards through the inside of the lower bushing 7, overcoming the force produced by the spring 18, thus opening the passage to the excess steam from inside the pressure cooker passing through the lower opening 17.

In the moment in which the ball 16 leaves the venting of the steam through the lower opening 17 free, the steam passes to the chamber defined in the lower bushing 7 and subsequently to the upper cover 6, and since the slits 9 partially poke out to the exterior of the lower bushing 7, leaving a venting for the steam towards the main body 3, the steam is released from the cooker through the slits 9 until reaching a pressure value equal to or less than the safety value, the ball 16 therefore moving downwards due to the action of the force caused by the spring 18 which forces the ball 16 to obstruct the passage of steam through the lower opening 17, the venting of the steam from inside the pressure cooker to the exterior thereby being closed again.

## Claims

1. A depressurization and opening safety device for pressure cookers, comprising a safety valve which is shaped to act due to an internal overpressure in the cooker evacuating the excess steam, and horizontally shiftable actuation means shaped to carry out the opening and closing of the cooker, said actuation means being assembled on the handle associated to the cover of the cooker such that when the cooker is in a closed position, said handle is facing another handle associated to the body of the cooker and situated below it, **characterized in that** the actuation means comprise a depressurization control (1) and an opening control (5), situated under the former, shaped to remain connected to one another with the possibility of a relative shifting movement between them according to a direction parallel to the shaft of the handle associated to the cover of the pressure cooker; **in that** the depressurization and opening safety device comprises a depressurization assembly (2) which in turn comprises a pressure sensing element (4) situated in a manner that it is facing the end (22) of the depressurization control (1), said end (22) having an inclined surface (15) shaped such that when the depressurization control (1) is actuated by the user in the depressurization direction, said depressurization control (1) acts on the depressurization assembly (2), the forward horizontal movement thereof being transformed into a downward vertical shifting movement of the pressure sensing element (4), allowing for steam venting to the exterior, and **in that** the actuation means are shaped such that when the depressurization has concluded, the depressurization assembly (2) moving downwards under the action of its own weight and allowing the forward movement of the depressurization control (1), the depressurization control (1) will shift with regard to the opening control (5) until reaching a stop, after which it drags said opening control (5), which in turn, as a result of its forward movement, triggers a cooker opening safety system.

2. A device according to claim 1, **characterized in that** the depressurization assembly (2) comprises, in addition to the pressure sensing element (4), a main body (3), the pressure sensing element (4) being assembled inside said main body (3) with the possibility of vertical shifting with regard to the latter; which main body (3) has a substantially cylindrically shaped chamber with at least one steam vent (19); and which pressure sensing element (4) partially projects through the open upper base of the main body (3), and comprises an upper cover (6) and a lower bushing (7), which upper cover (6) is topped by a cap (8) and has at least one venting slit (9) starting from the cap (8), and which lower bushing (7) has a peripheral flange (10) of larger diameter on its lower base, said lower bushing (7) being locked with the upper cover (6) by means of a peripheral projection (11) situated on the upper cover (6), shaped to act as a retention stop such that at all times the slits (9) partially poke out to the exterior of the lower bushing (7).

3. A device according to the previous claims, **characterized in that** the lower bushing (7) has a peripheral ring (20) attached to it which has a certain upward inclination on its lower face shaped such that it channels the venting of the steam coming from inside the cooker to the vents (19) made in the main body (3) which in turn direct the venting of the steam to the exterior when the depressurization of the cooker is carried out.

4. A device according to the previous claims, **characterized in that** the pressure sensing element (4) has a ball (16) inside obstructing the lower opening (17) of the lower bushing (7), said ball (16) being assembled against the action of a spring (18) shaped such that the ball (16) overcomes the force of the spring (18) if the pressure exceeds a given safety value for the pressure inside the cooker, enabling the venting of the steam to the exterior through the slits (9) of the upper cover (6) of the pressure sensing element (4).
